# EUROPEAN PATENT SPECIFICATION

(11) **EP 3 095 719 B1**
(45) Date of publication and mention of the grant of the patent: **09.12.2026**
(21) Application number: 16170610.6
(22) Date of filing: 20.05.2016
(51) Int. Cl.: B65C 9/06, B65C 9/40, G01N 21/90

(54) **CAROUSEL FOR PROCESSING CONTAINERS**
KARUSSELL ZUR VERARBEITUNG VON BEHÄLTERN
CARROUSEL POUR TRAITEMENT DE RÉCIPIENTS

(30) Priority: 22.05.2015 IT UB20150711
(43) Date of publication of application: 23.11.2016
(73) Proprietor: ACMI Labelling S.r.l., 43058 Sorbolo (PR) (IT)
(72) Inventor: PEDERCINI, Maurizio, 46045 MARMIROLO MN (IT); BONARDI, Luca, 46030 SAN GIORGIO DI MANTOVA MN (IT); MINUCELLI, Silvano, 37019 PESCHIERA DEL GARDA VR (IT); FACCILONGO, Andrea, 46045 MARMIROLO MN (IT)
(74) Representative: Modiano, Micaela Nadia

(56) References cited:
- EP-A1- 0 635 452
- WO-A1-2009/069159
- WO-A1-2012/090093
- DE-U1- 29 904 552
- FR-A- 1 474 383

## Description

The present invention relates to a carousel for processing containers, provided with a device for controlling the labels applied to the containers.

Carousels for processing containers are known and widely used which comprise a plurality of supporting pans for respective containers to be processed, which are arranged at the peripheral region of the carousel and to which the containers are fed.

As regards carousels associated with one or more labeling stations, it is noted that very often there are devices for controlling one or more labels as regards their integrity, their correct placement and the optional presence of bar codes or of other elements used for traceability.

Usually, these control devices are constituted by sensors that are fixed with respect to the rotation of the carousel and scan the advancing containers: this evidently entails the need to have an angular portion of the carousel that is dedicated to the execution of these operations.

Some containers, such as for example those for alcoholic beverages and high-proof spirits, are associated with multiple labels, such as a front label, a rear label, a stamp, a state or tamper-evident seal, optional collars, etc.

In these cases, a number of sensors that matches the number of labels to be checked is used.

This evidently causes an increase in the complexity of the carousel and the need to dedicate a considerable angular portion of the carousel to control operations.

Furthermore, in currently known solutions it is often necessary to act on the sensors, for example to adjust their position or to add some in case of changes of the format of the containers to be labeled,

DE 299 04 552 U1 discloses a device for feeding labels comprising the features of the preamble of claim 1. It discloses a labeling unit having a stationary label container, a glue roller, a rotating carrier provided with a pivotable and malleable removal segment, a rotating gripper cylinder with gripper fingers arranged on the circumference and pressing elements for the labels, and a displacement device. The labeling unit is fixed radially and tangentially relative to the bottle table, while the labeling unit is fastened to the bottle table to be labeled,

WO 2009/069159 A1 discloses an operating device comprising means suited to move a support with an alternating motion around an axis. The means comprise one or more permanent magnets arranged along a section of a circumference that is concentric with the axis and a winding controlled by a control unit. There is also provided a machine for checking and inspecting containers.

The aim of the present invention is to solve the problems and obviate the drawbacks described above, by providing a carousel for processing containers that is considerably easier and more practical to use than the known ones currently in use.

Within this aim, an object of the invention is to provide a carousel for processing containers that is provided with a label control device that is extremely precise and reliable in its operation.

A further object of the invention is to devise a carousel for processing containers that allows to limit significantly the overall space occupations.

Another object of the invention is to propose a carousel that is associated with a device for label control that uses a limited number of sensors, so as to reduce significantly the time required for replacement and/or adjustment of the sensors, for example as a consequence of a change of format.

This aim, as well as these objects and others that will become better apparent hereinafter, are achieved by a carousel for processing containers according to the provisions of claim 1.

Further characteristics and advantages of the invention will become better apparent from the description of some preferred but not exclusive embodiments of a carousel for processing containers according to the invention, illustrated by way of nonlimiting example in the accompanying figures, wherein:

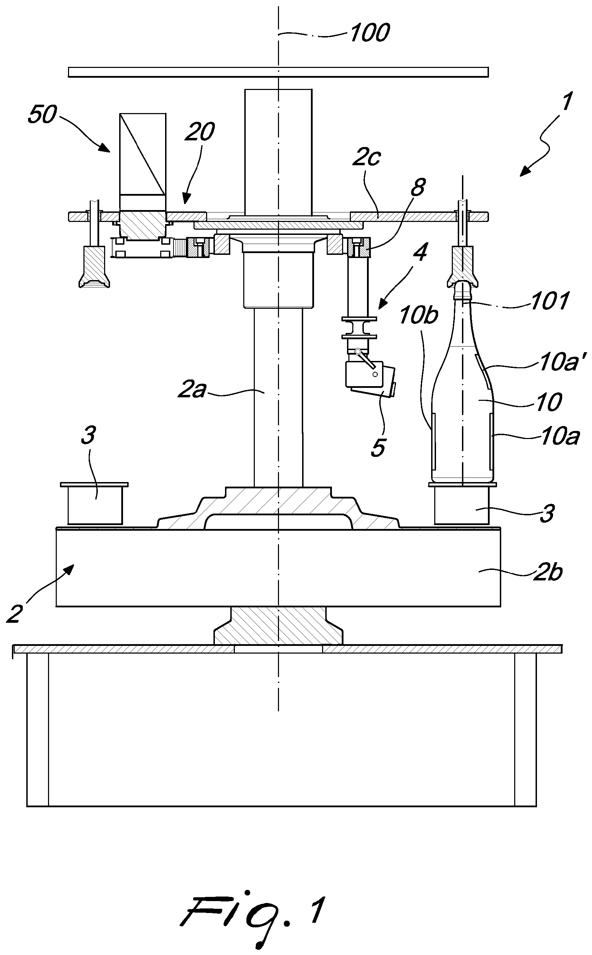

Figure 1 is a side elevation view of a first embodiment of a carousel according to the invention;
Figure 2 is a schematic top view of the carousel of Figure 1;
Figure 3 is a side elevation view of a first constructive variation of a carousel according to the invention;
Figure 4 is a schematic top view of the carousel of Figure 3;
Figure 5 is a schematic top view of a further carousel which is not according to the invention.

In the exemplary embodiments that follow, individual characteristics, given in relation to specific examples, may actually be interchanged with other different characteristics that exist in other exemplary embodiments, within the scope of the apended claims.

With reference to the figures, the present invention relates to a carousel, designated generally by the reference numeral 1, for the processing of containers 10.

The carousel 1 comprises a base structure 2, which can rotate about a rotation axis 100 of the carousel 1.

The base structure 2 supports a plurality of supporting elements 3 that are mutually angularly spaced and are intended to support a respective container 10 to be processed.

Advantageously, the base structure 2 has a central movement body 2a, which is extended parallel to the rotation axis 100 and is connected in a lower region to a lower footing 2b.

The lower footing 2b supports, conveniently at its own peripheral region, the supporting elements 3.

The containers 10 to be processed are fed to the carousel 1 by a feeder 40.

Conveniently, the feeder 40 can comprise a feeder star conveyor.

Advantageously, the containers 10 treated during their movement on the carousel 1 are unloaded from it by means of an unloading device 41.

The unloading device 41 comprises for example an unloading star conveyor.

The carousel 1 is associated with at least one station 30 for labeling the containers 10.

According to the present invention, the carousel 1 comprises a device 4 for controlling at least one label 10a, 10a', 10b, etc., applied on a respective container 10 by the labeling station 30.

The control device 4 is arranged along the carousel 1 downstream of the labeling station or stations 30.

The control device 4 comprises at least one sensor 5 that can move around the rotation axis 100 of the carousel 1 between an initial angular position and a final angular position and vice versa.

The final angular position is arranged downstream of the initial angular position along the direction of rotation 200 of the base structure 2 about the rotation axis 100 of the carousel 1.

During the movement from the initial angular position to the final angular position, the or each sensor 5 is functionally associated with a container 10, which can move around the rotation axis 100 of the carousel 1, for controlling at least one label 10a, 10a', 10b applied to the container 10.

Preferably, during this movement, the container 10 is turned about its own longitudinal axis 101, which is substantially parallel to the rotation axis 100, typically by means of a rotation of the respective supporting element 3, constituted for example by a pan.

During the step for detection of the label or labels 10a, 10a', 10b, etc. by the sensor 5, the rotation rate of the supporting element 3, and therefore of the container 10, about its own longitudinal axis 101 is such as to allow at least a rotation that is sufficient to allow to scan all the labels 10a, 10b that are applied to the container 10 during the movement of the sensor or sensors 5 from the initial angular position to the final angular position.

The sensor or sensors 15 can be intended to also control printing or markings applied directly to the container 10.

The sensor or sensors 5 can further detect three-dimensional elements such as protrusions, hollows or logos provided directly on the containers 10 in order to allow checking of the correct orientation and/or placement of the labels 10a, 10a', 10b with respect to such three-dimensional elements.

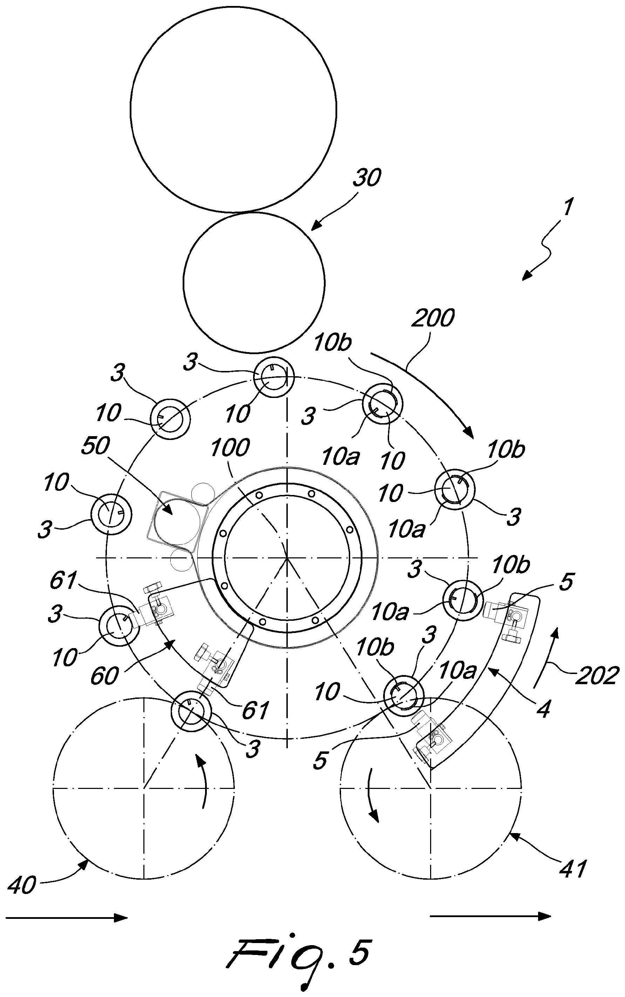

In an example which does not belong to the present invention, the control device 4 is arranged outside the carousel 1, as shown in Figure 5.

The control device 4 can be supported for example by a module that can be arranged laterally or can be fixed externally to the carousel 1 and is provided with means for the movement of the sensor or sensors 5 that are adapted to allow their transition from the initial angular position to the final angular position and vice versa.

If the movement means are independent of the movement of the carousel 1, there are control means adapted to synchronize the angular rotation rate of the sensor 5 about the rotation axis 100 of the carousel 1 from the initial angular position to the final angular position with the same rotation rate of the carousel 1 about the main rotation axis 100.

According to the present invention, the arrangement of the control device 4 is within the carousel 1.

In this case also, there can be control means adapted to synchronize the angular rotation rate of the sensor 5 about the rotation axis 100 of the carousel 1 from the initial angular position to the final angular position with the same rotation rate of the carousel 1 about the main rotation axis 100.

As an alternative, the carousel 1 can be associated with kinematic connection means 20 that are arranged between the base structure 2 and the or each sensor 5.

The kinematic connection means 20 are adapted to render integral in rotation the or each sensor 5 with the base structure 2 during the movement of the sensor or sensors 5 between the initial angular position and the final angular position.

Advantageously, the kinematic connection means 20 are adapted to render each sensor integral with an upper pan 2c, which rotates integrally with the central movement body 2a.

Obviously, nothing prevents providing the kinematic connection means 20 so they are suitable to render each sensor 5 integral with the central movement body 2a or with the lower footing 2b or in general with any element supported by the base structure 2.

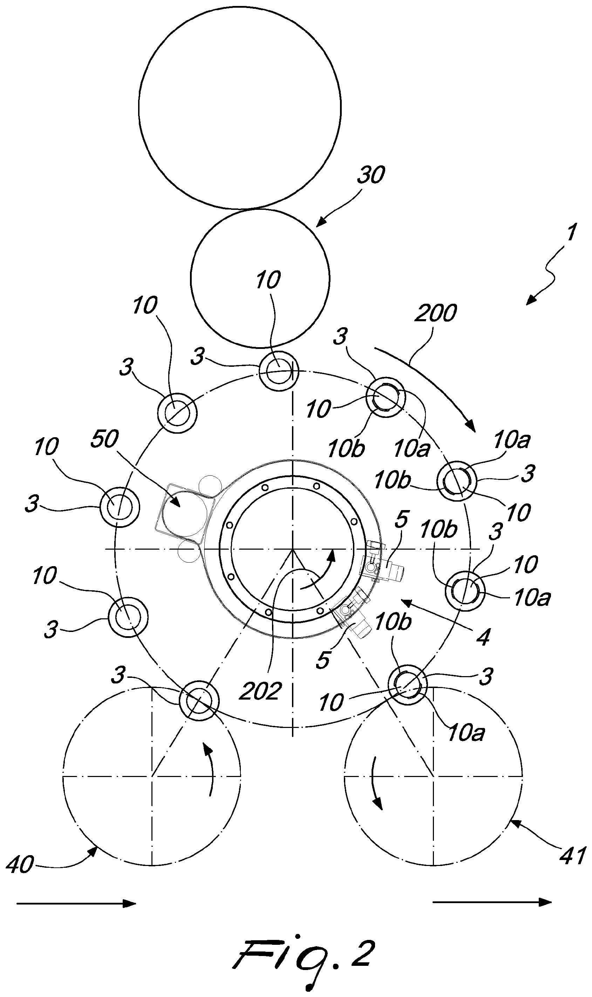

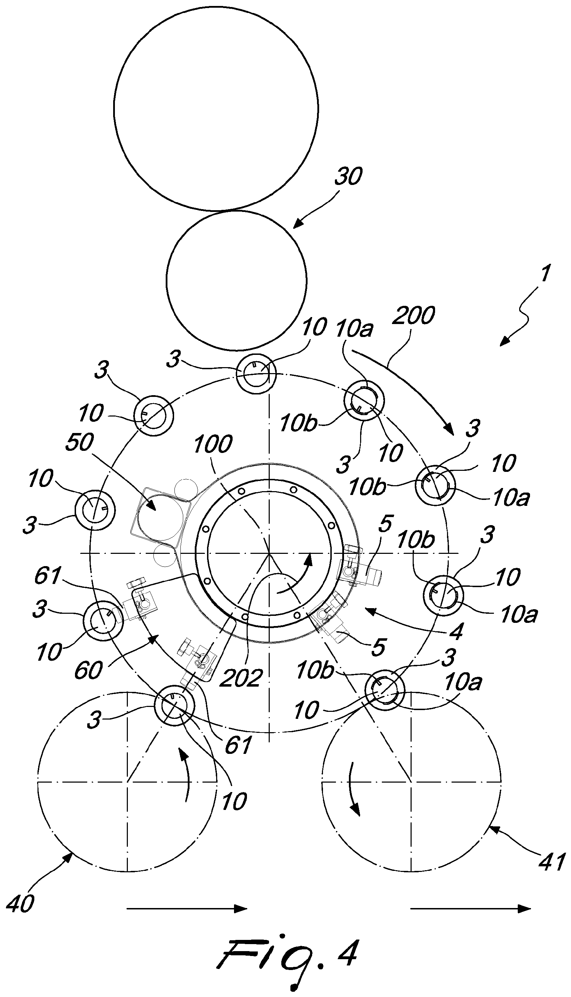

The kinematic connection means 20 are further associated with motor means 50, which are adapted to return on command the sensor or sensors 5 from the final angular position to the initial angular position by means of an angular displacement of the sensor or sensors 5 in the opposite direction (indicated in Figures 2 and 4 by the arrow 202) with respect to the rotation 200 of the base structure 2 about the rotation axis 100 of the carousel 1.

Conveniently, the motor means 50 are supported by the base structure 2.

In particular, the motor means 50 comprise an actuation motor that comprises a motor body that is supported by the base structure 2 and can rotate together with the base structure 2 about the axis 100 of the carousel 1.

The carousel 1 can be associated, upstream of the labeling station or stations 30, with a device 60 for orienting the containers 10, which has one or more orientation sensors 61.

The same motor means 50 can actuate with a back-and-forth motion both the sensors 5 of the control device 4 and the orientation sensors 61 of the orientation device 60.

Nothing prevents the provision, further, of a mutually independent motion of the sensors 5 of the control device 4 and of the orientation sensors 61 of the orientation device 60.

In this case it is convenient to provide respective control means adapted to synchronize the respective angular velocities of the sensors 5 and of the orientation sensors 61 around the rotation axis 100 of the carousel 1 from the initial angular position to the final angular position with the same rotation rate of the carousel 1 about the main rotation axis 100.

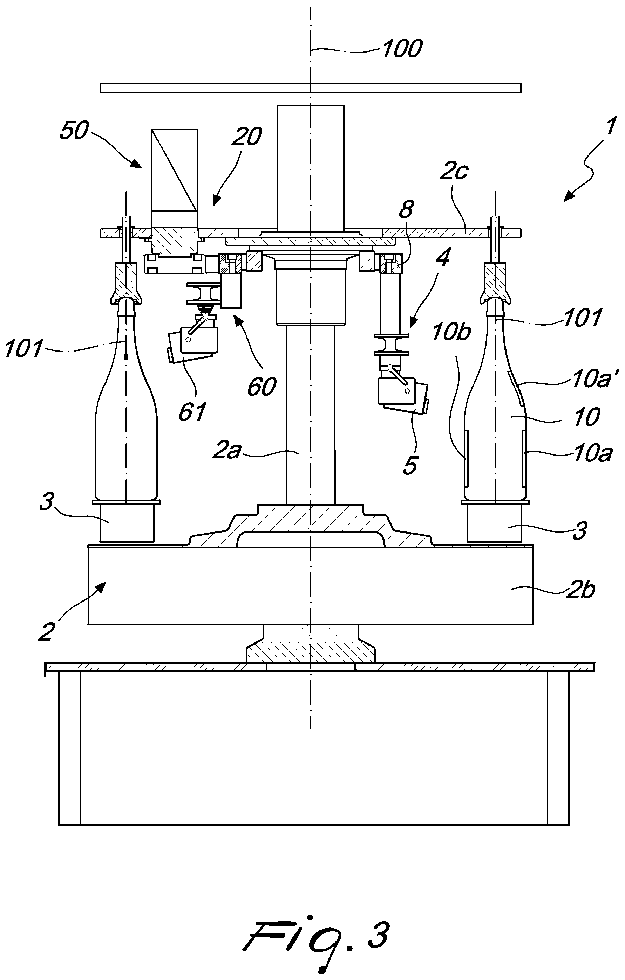

With reference to the embodiment shown in Figures 3 and 4, advantageously the sensor or sensors 5, and optionally the orientation sensors 61 if present, are supported by a supporting element 8.

The supporting element 8, or at least part thereof, can rotate with respect to the base structure 2 about the rotation axis 100 of the carousel 1 with a back-and-forth motion.

By way of example, the supporting element 8 comprises a center bearing.

In greater detail, the kinematic connection means 20 comprise an element for kinematic connection between a first portion of the supporting element 8, conveniently the external body of the center bearing, which is extended around the rotation axis 100 of the carousel 1, and an actuation body, which is supported by the base structure 2 and can rotate together with it about the rotation axis 100 of the carousel 1.

In particular, the kinematic connection element connects, in practice rigidly when the motor means 50 are not actuated, the first portion of the supporting element 8 to which the sensors 5 are connected to the base structure 2.

In practice, when the motor means 50 are not actuated, the base structure 2 is adapted to entrain in rotation the first portion of the supporting element 8 and therefore the sensor or sensors 5 supported by it, at the same angular velocity as the base structure 2 in order to determine the movement of the sensor or sensors 5 from the initial angular position to the final angular position.

Advantageously, the actuation body can be actuated by the motor means 50 in order to move on command the first portion of the supporting element 8 in rotation in the opposite direction (along the orientation of the arrow 202) with respect to the rotation (indicated by the arrow 200) of the base structure 2 about the rotation axis 100 of the carousel 1, so as to allow the passage of the sensor or sensors 5 from the final angular position to the initial angular position.

Obviously, while the sensor or sensors 5 return from the final angular position toward the initial angular position, the base structure 2, and the motor means 50 with it, continue to rotate along the direction of rotation indicated by the arrow 200.

Preferably, the actuation body comprises the output shaft of the actuation motor, which provides the motor means 50, supported by the base structure 2.

Advantageously, the kinematic connection means 20 comprise a pinion element that has an axis that is parallel to the rotation axis 100 of the carousel 1.

The pinion element is connected in input (typically by keying) to the output shaft of the actuation motor and in output to a gear, which is integral with the portion of the supporting element 8 and is extended about the rotation axis 100 of the carousel 1.

The connecting element comprises a closed loop body, constituted for example by a toothed belt, for connection between the pinion element and a pulley that defines the portion of the supporting element.

In particular, the tooth belt partially wraps around the pinion element and the pulley.

The control device can comprise two or more sensors 5 that are intended to control, during their movement from the initial angular condition toward the final angular condition, a respective container 10.

However, nothing prevents the control device 4 from comprising at least two sensors 5 that are intended in sequence to control respectively one or more labels 10a, 10a', 10b or prints applied to the same container 10.

In practice, in this case, a first sensor 5 can control one or more labels 10a, 10a', 10b, etc., while the sensor 5 arranged downstream of the first sensor 5 can check, on the same container 10, additional labels 10a, 10a', 10b or prints.

Operation of the carousel 1 according to the invention is evident from what has been described above.

When the sensor or sensors 5 are in the condition for controlling the labels 10a, 10a', 10b applied to the container 10, they are moved with a back-and-forth motion about the rotation axis 100 at the same angular velocity as the base structure 2, so that during the displacement from the initial angular position to the final one the sensors 5 have the same angular velocity, around the axis 100, as the containers 10 on which they are scanning the labels 10a, 10a', 10b.

During the transition of the sensors 5 from the initial angular position to the final angular position, the container 10 is moved in rotation about its own longitudinal axis 101 so as to allow the sensor or sensors 5 to scan all the labels 10a, 10b.

In practice it has been found that the invention is able to achieve fully the intended aim and objects in all of its embodiments.

The invention thus conceived is susceptible of numerous modifications and variations, as long as these are within the scope of the appended claims.

In practice, the materials used, so long as they are compatible with the specific use, as well as the shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A carousel (1) for processing containers, comprising a base structure (2) that can rotate about the rotation axis (100) of said carousel (1) and supports a plurality of supporting elements (3) that are mutually angularly spaced and are intended to support a respective container (10) to be processed, said base structure (2) being associated with at least one station (30) for labeling the containers (10), wherein said carousel (1) comprises a device (4) for controlling at least one label (10a, 10a', 10b, etc.) applied by said labeling station (30) to a respective container (10) that is arranged, along said carousel (1), downstream of said at least one labeling station (30), **characterized in that** said control device (4) comprises at least one sensor (5) that can move around the rotation axis (100) of said carousel (1) between an initial angular position and a final angular position and vice versa, during the movement from said initial angular position to said final angular position said at least one sensor (5) being functionally associated with a container (10), which can move around the rotation axis (100) of said carousel (1), in order to control at least one label (10a, 10a', 10b) applied to said container (10) wherein said container (10) can rotate about its own longitudinal axis (101), which is substantially parallel to the rotation axis (100), when it is functionally associated with said control device (4) and wherein said control device (4) is arranged inside the pitch diameter of said carousel (1).

2. The carousel (1) according to claim 1, **characterized in that** it comprises control means adapted to synchronize the rotary motion around the rotation axis (100) of said at least one sensor (5) with the rotary motion of the respective container (10) around said rotation axis (100).

3. The carousel (1) according to claim 1 or 2, **characterized in that** it comprises kinematic connection means (20) arranged between said base structure (2) and said at least one sensor (5) and adapted to render integral in rotation said at least one sensor (5) with said base structure (2) during the movement of said at least one sensor (5) between said initial angular position and said final angular position.

4. The carousel (1) according to one or more of the preceding claims, **characterized in that** said kinematic connection means (20) are associated with motor means (50) which are adapted to return on command said at least one sensor (5) from said final angular position to said initial angular position by means of an angular movement (202) of said at least one sensor (5) in the opposite direction with respect to the rotation (200) of said base structure (2) about the rotation axis (100) of said carousel (1).

5. The carousel (1) according to one or more of the preceding claims, **characterized in that** it comprises, upstream of said at least one labeling station (30), a device (60) for orienting said containers (10) .

6. The carousel (1) according to one or more of the preceding claims, **characterized in that** said control device (4) is functionally associated with said orientation device (60).

7. The carousel (1) according to one or more of the preceding claims, **characterized in that** said at least one sensor (5) of said control device (4) and said at least one orientation sensor (61) of said orientation device (60) are associated with respective control means adapted to synchronize the respective angular velocities around the main rotation axis (100) from the initial angular position to the final angular position with the same rotation rate of said carousel (1) about the main rotation axis (100).

## Patentansprüche

1. Ein Karussell (1) zur Verarbeitung von Behältern, das eine Grundstruktur (2) umfasst, welche sich um die Drehachse (100) des Karussells (1) drehen kann und eine Vielzahl tragender Elemente (3) trägt, die winklig voneinander beabstandet sind und dazu dienen, einen entsprechenden zu bearbeitenden Behälter (10) zu tragen, wobei die Grundstruktur (2) mit mindestens einer Station (30) zur Etikettierung der Behälter (10) verknüpft ist, wobei das Karussell (1) eine Vorrichtung (4) zur Kontrolle mindestens eines Etiketts (10a, 10a', 10b usw.) umfasst, das von der Etikettierstation (30) auf einen entsprechenden Behälter (10) aufgebracht wird, entlang dem Karussell (1) stromabwärts von der mindestens einen Etikettierstation (30) angeordnet; **dadurch gekennzeichnet, dass** die Kontrollvorrichtung (4) mindestens einen Sensor (5) umfasst, der sich um die Drehachse (100) des Karussells (1) zwischen einer Ausgangs-Winkelposition und einer End-Winkelposition und umgekehrt bewegen kann, wobei der mindestens eine Sensor (5) während der Bewegung aus der Ausgangs-Winkelposition in die End-Winkelposition funktionell mit einem Behälter (10) verknüpft ist, der sich um die Drehachse (100) des Karussells (1) bewegen kann, um mindestens ein auf den Behälter (10) aufgebrachtes Etikett (10a, 10a', 10b) zu kontrollieren, wobei der Behälter (10) sich um seine eigene Längsachse (101) drehen kann, die im Wesentlichen parallel zur Drehachse (100) ist, wenn er funktionell mit der Kontrollvorrichtung (4) verknüpft ist, und wobei die Kontrollvorrichtung (4) sich innerhalb des Teilkreisdurchmessers des Karussells (1) befindet.

2. Das Karussell (1) gemäß Anspruch 1, **dadurch gekennzeichnet, dass** es Steuerungsmittel umfasst, ausgebildet, um die Drehbewegung um die Drehachse (100) des mindestens einen Sensors (5) mit der Drehbewegung des jeweiligen Behälters (10) um die Drehachse (100) zu synchronisieren.

3. Das Karussell (1) gemäß Anspruch 1 oder 2, **dadurch gekennzeichnet, dass** es kinematische Verbindungsmittel (20) umfasst, angeordnet zwischen der Grundstruktur (2) und dem mindestens einen Sensor (5) und ausgebildet, um den mindestens einen Sensor (5) während der Bewegung des mindestens einen Sensors (5) zwischen der Ausgangs-Winkelposition und der End-Winkelposition integral in der Drehung mit der Grundstruktur (2) zu machen.

4. Das Karussell (1) gemäß einem oder mehreren der obigen Ansprüche, **dadurch gekennzeichnet, dass** die kinematischen Verbindungsmittel (20) mit Motormitteln (50) verknüpft sind, die ausgebildet sind, um den mindestens einen Sensor (5) mit Hilfe einer Winkelbewegung (202) des mindestens einen Sensors (5) in die Richtung, die der Drehung (200) der Grundstruktur (2) um die Drehachse (100) des Karussells (1) entgegengesetzt ist, auf Befehl aus der End-Winkelposition in die Ausgangs-Winkelposition zurückzustellen.

5. Das Karussell (1) gemäß einem oder mehreren der obigen Ansprüche, **dadurch gekennzeichnet, dass** es stromaufwärts von der mindestens einen Etikettierstation (30) eine Vorrichtung (60) zur Ausrichtung der Behälter (10) umfasst.

6. Das Karussell (1) gemäß einem oder mehreren der obigen Ansprüche, **dadurch gekennzeichnet, dass** die Kontrollvorrichtung (4) funktionell mit der Ausrichtungsvorrichtung (60) verbunden ist.

7. Das Karussell (1) gemäß einem oder mehreren der obigen Ansprüche, **dadurch gekennzeichnet, dass** der mindestens eine Sensor (5) der Kontrollvorrichtung (4) und der mindestens eine Ausrichtungssensor (61) der Ausrichtungsvorrichtung (60) mit dazugehörigen Steuerungsmitteln verknüpft sind, ausgebildet, um die jeweiligen Winkelgeschwindigkeiten um die Haupt-Drehachse (100) aus der Ausgangs-Winkelposition in die End-Winkelposition mit derselben Drehgeschwindigkeit des Karussells (1) um die Haupt-Drehachse (100) zu synchronisieren.

## Revendications

1. Carrousel (1) destiné au traitement de récipients, comprenant une structure de base (2) pouvant tourner autour de l'axe de rotation (100) dudit carrousel (1) et supportant une pluralité d'éléments de support (3) espacés angulairement les uns des autres et destinés à supporter chacun un récipient respectif (10) à traiter, ladite structure de base (2) étant associée à au moins une station (30) destinée à l'étiquetage des récipients (10), où ledit carrousel (1) comprend un dispositif (4) destiné à contrôler au moins une étiquette (10a, 10a', 10b, etc.) appliquée par ladite station d'étiquetage (30) sur un récipient (10) respectif qui est disposé, le long dudit carrousel (1), en aval de ladite au moins une station d'étiquetage (30), **caractérisé en ce que** ledit dispositif de contrôle (4) comprend au moins un capteur (5) capable de se déplacer autour de l'axe de rotation (100) dudit carrousel (1) entre une position angulaire initiale et une position angulaire finale et vice versa, pendant le déplacement de ladite position angulaire initiale vers ladite position angulaire finale, ledit au moins un capteur (5) étant associé fonctionnellement à un récipient (10), qui peut se déplacer autour de l'axe de rotation (100) dudit carrousel (1), afin de contrôler au moins une étiquette (10a, 10a', 10b) apposée sur ledit récipient (10), où ledit récipient (10) peut tourner autour de son propre axe longitudinal (101), qui est sensiblement parallèle à l'axe de rotation (100), lorsqu'il est associé fonctionnellement audit dispositif de contrôle (4), et où ledit dispositif de contrôle (4) est disposé à l'intérieur du diamètre primitif dudit carrousel (1).

2. Le carrousel (1) selon la revendication 1, **caractérisé en ce qu'**il comprend des moyens de contrôle adaptés pour synchroniser le mouvement de rotation autour de l'axe de rotation (100) dudit au moins un capteur (5) avec le mouvement de rotation du récipient (10) correspondant autour dudit axe de rotation (100).

3. Le carrousel (1) selon la revendication 1 ou 2, **caractérisé en ce qu'**il comprend des moyens de liaison cinématique (20) disposés entre ladite structure de base (2) et ledit au moins un capteur (5) et adaptés pour rendre ledit au moins un capteur (5) solidaire en rotation de ladite structure de base (2) pendant le déplacement dudit au moins un capteur (5) entre ladite position angulaire initiale et ladite position angulaire finale.

4. Le carrousel (1) selon une ou plusieurs des revendications précédentes, **caractérisé en ce que** lesdits moyens de liaison cinématique (20) sont associés à des moyens moteurs (50) qui sont adaptés pour ramener, sur commande, ledit au moins un capteur (5) de ladite position angulaire finale à ladite position angulaire initiale au moyen d'un mouvement angulaire (202) dudit au moins un capteur (5) dans le sens opposé à la rotation (200) de ladite structure de base (2) autour de l'axe de rotation (100) dudit carrousel (1).

5. Le carrousel (1) selon une ou plusieurs des revendications précédentes, **caractérisé**
**en ce qu'**il comprend, en amont de ladite au moins une station d'étiquetage (30), un dispositif (60) destiné à orienter lesdits récipients (10).

6. Le carrousel (1) selon une ou plusieurs des revendications précédentes, **caractérisé en ce que** ledit dispositif de contrôle (4) est associé fonctionnellement audit dispositif d'orientation (60).

7. Le carrousel (1) selon une ou plusieurs des revendications précédentes, **caractérisé en ce que** ledit au moins un capteur (5) dudit dispositif de contrôle (4) et ledit au moins un capteur d'orientation (61) dudit dispositif d'orientation (60) sont associés à des moyens de commande respectifs adaptés pour synchroniser les vitesses angulaires respectives autour de l'axe de rotation principal (100), de la position angulaire initiale à la position angulaire finale, à la même vitesse de rotation dudit carrousel (1) autour de l'axe de rotation principal (100).
